# EUROPEAN PATENT APPLICATION

(11) **EP 0 630 770 A1**
(43) Date of publication of application: **28.12.1994**
(21) Application number: 94107750.5
(22) Date of filing: 19.05.1994
(51) Int. Cl.: B60G 15/07, B60G 3/26

(54) **Rear suspension for motor vehicles**

(30) Priority: 23.06.1993 IT TO930457
(71) Applicant: FIAT AUTO S.p.A., I-10135 Torino (IT)
(72) Inventor: Egidi, Corrado, I-10139 Torino (IT)
(74) Representative: Serra, Francesco

(57) **Abstract**

The McPherson-type rear suspension for front-wheel drive motor vehicles comprises a wheel hub (10), a spring - shock absorber assembly (2), articulated to the body and to the wheel hub (10), a cross member (16) which is fixed to the body and articulated by means of two symmetrical arms (12, 14) to the wheel hub (10), and a third arm (20) for articulation between the end (18) of the spring - shock absorber assembly (2) and the cross member (16).

## Description

The present invention relates to the rear suspensions of motor vehicles, in particular those of the McPherson type, mounted on front-wheel drive vehicles. Rear suspension systems of the type specified above are known in which the spring - shock absorber unit is articulated, at one of its ends, to the vehicle body and, at its other end, to the wheel-bearing hub of the vehicle itself.

The wheel-bearing hub is articulated by means of two arms to a rear cross member which is fixed to the vehicle body.

Although they are satisfactory from the point of view of behaviour, suspensions of the type described above do not enable the camber angle to be controlled in optimum fashion and, in particular, they do not enable the camber angle to be controlled for the entire travel of the wheel, such that it tends to open out progressively downwardly as it rises towards the vehicle body.

The object of the present invention is to provide a McPherson-type rear suspension for front-wheel drive vehicles which overcomes the above disadvantage, is of simple construction and of low cost.

A further object of the present invention is to produce a suspension in accordance with the above which is completely interchangeable with a conventional suspension without alteration of the body.

These objects are achieved by means of a McPherson suspension having the characteristics specified in the following claim.

The invention will now be described with reference to the appended drawings provided solely by way of non-limiting example and in which:
- Figure 1 is a perspective view of the suspension to which the invention relates; and
- Figure 2 shows a partial plan view of the suspension to which the invention relates.

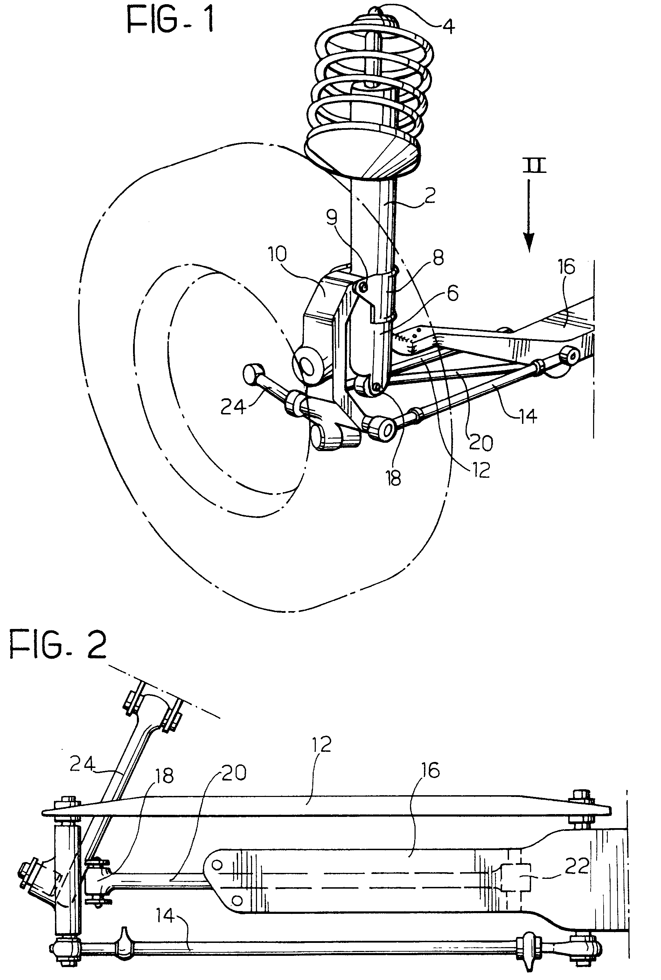

With reference to Figures 1 and 2, in which the common parts are indicated by the same reference numerals, the spring - shock absorber assembly articulated at its end 4 to the vehicle body (not shown) is indicated 2; its end portion 6 is fixed to a bracket 8 articulated to the wheel hub 10 by the articulation 9.

The wheel hub is articulated by two arms 12 and 14 to a cross member 16 which is fixed to the vehicle body. The articulations of the arms 12 and 14 to the body and to the wheel hub 10 are preferably produced by means of rotational couplings, for example, by means of cylindrical bushes, or by couplings by means of rubber bushes (silent blocks).

The lower end 18 of the spring - shock absorber assembly 2 is connected in an articulated manner to the cross member 16 by means of a third arm 20 at a point 22.

The wheel hub 10 is also connected to the body by means of a control rod 24, the purpose of which is outside the present description.

In use, when the wheel moves out towards the vehicle body 10, the ends, on the wheel side, of the arms 12 and 14 move out in a corresponding manner; the same occurs for the shock absorber body 6 by means of the articulation 9 and, thus, the lower part of the shock absorber is also drawn upwards.

The rod 20 forces the lower part of the shock absorber 6 to travel over a path such that the upward movement of the articulation 9 is accompanied by a movement of the articulation 9 itself inwardly of the vehicle, such that the camber of the wheel progressively increases to the bottom point of the travel of the shock absorber.

Naturally, the principle of the invention remaining the same, the details of construction may be varied widely from those described and illustrated without thereby departing from the scope of the present invention.

## Claims

1. A McPherson-type rear suspension for front-wheel drive vehicles, comprising a wheel hub (10), a spring - shock absorber assembly (2) articulated to the body and to the wheel hub (10), a cross member (16) which is fixed to the body and articulated by two symmetrical arms (12, 14) to the wheel hub (10), characterized in that it has a third arm (20) for articulation between the end (18) of the spring - shock absorber assembly (2) and the cross member (16).
